# EUROPÄISCHE PATENTSCHRIFT

(11) **EP 3 164 914 B1**
(45) Veröffentlichungstag und Bekanntmachung des Hinweises auf die Patenterteilung: **26.12.2018**
(21) Anmeldenummer: 15732261.1
(22) Anmeldetag: 29.06.2015
(51) Int. Cl.: H01R 13/73, H01R 9/26, H01R 25/00, F16B 2/22, F16B 21/07

(54) **GEHÄUSE UND ANORDNUNG**
HOUSING AND ASSEMBLY
BOÎTIER ET ENSEMBLE

(30) Priorität: 05.07.2014 DE 102014109423
(43) Veröffentlichungstag der Anmeldung: 10.05.2017
(73) Patentinhaber: Eaton Intelligent Power Limited, Dublin 4 (IE)
(72) Erfinder: KUPPEL, Klaus, 53505 Kalenborn (DE); ARNDT, Karl Heinz, 53859 Niederkassel (DE); Develice, Anthony Edward, Mukilteo, WA 98275 (US); Rees, Steven Dale, Bothwell, WA 98021 (US); Dexter, Alex Brandon, Lake Stevens, WA 98258 (US)
(74) Vertreter: Eaton IP Group EMEA
(86) Internationale Anmeldenummer: PCT/EP2015/064754
(87) Internationale Veröffentlichungsnummer: WO 2016/005222

(56) Entgegenhaltungen:
- WO-A1-85/03800
- WO-A1-95/34783
- WO-A2-2005/086498
- WO-A2-2010/134887
- DE-U1-202013 103 753
- US-A1- 2007 049 073
- US-A1- 2008 112 169

## Beschreibung

Die vorliegende Erfindung betrifft ein Steckergehäuse, das Verbindungsmittel zur reversiblen rastenden Aufnahme von flexiblen Armen eines Klemmelements aufweist, wobei die Verbindungsmittel entlang eines Klemmbereichs, in den das Klemmelement im gesteckten Zustand, in dem das Steckergehäuse auf das Klemmelement gesteckt ist, eingreift, im Querschnitt zumindest kreissegmentförmig ausgebildet ist. Des Weiteren betrifft die vorliegende Erfindung eine Anordnung mit dem Steckergehäuse.

Gehäuse für elektrische Verbinder werden beispielsweise für T-Verteiler verwendet, über die elektronische Bauteile in ein Bussystem eingebunden werden. Solche T-Verteiler, auch T-Connector genannt, weisen in an sich bekannter Weise wenigstens eine Abzweigleitung auf, über welche Sensoren oder Aktoren an eine Stromleitung und/oder eine Datenbusleitung angeschlossen werden. Die üblicherweise T-förmig oder Doppel-T-förmig ausgebildeten Steckergehäuse werden zur Fixierung der T-Verteiler an Trägerelemente, beispielsweise Maschinenwände oder Trägerschienen, festgeschraubt.

Nachteilig daran ist, dass es aufgrund der zumeist engen Bauräume an den Maschinen nicht oder nur schwer möglich ist, die Steckergehäuse direkt in die Nähe der zu integrierenden Sensoren oder Aktoren zu platzieren. Um die Steckergehäuse am Trägerelement festschrauben zu können, wird ein ausreichend großer Bauraum erfordert, damit manuelle oder elektronisch betriebene Schraubwerkzeuge angesetzt werden können. Da dieser oftmals nicht gegeben ist, können die Steckergehäuse nicht in unmittelbarer Nähe zu den Sensoren oder Aktoren befestigt werden, so dass längere Kabelwege zwischen den Steckergehäusen und den zu integrierenden elektronischen Bauteilen in Kauf genommen werden.

Aus der WO 2010/134887 A2 sind Verbinder zum Halten von Gehäusen für elektronische Bauteile eines Beleuchtungselementes an einer Tragschiene bekannt.

Aufgabe der vorliegenden Erfindung ist es daher, ein Gehäuse für einen elektrischen Verbinder bereitzustellen, das auch in engen Bauräumen auf einfache Weise an einem Trägerelement befestigt werden kann.

Diese Aufgabe ist erfindungsgemäß bei einem Gehäuse für einen elektrischen Verbinder der eingangs genannten Art dadurch gelöst, dass die Verbindungsmittel außenliegende Hinterschneidungen umfassen, die an zwei gegenüberliegenden Außenflächen des Steckergehäuses ausgebildet sind, und dass die Verbindungsmittel seitliche Anschlagsflächen aufweisen, die zwischen sich den Klemmbereich definieren.

Der Erfindung liegt somit die Überlegung zugrunde, das Gehäuse für einen elektrischen Verbinder, insbesondere ein elektrisches Steckergehäuse für einen elektrischen Stecker, werkzeuglos an einem Trägerelement zu montieren. Hierzu schlägt die Erfindung vor, dass das Gehäuse derart ausgebildet ist, dass es mittels einer lösbaren Rastverbindung auf ein Klemmelement aufgesteckt werden kann. Im gesteckten Zustand wird das Gehäuse somit mittels einer Rastverbindung zwischen dem Verbindungsmittel und den flexiblen Armen des Klemmelements am Klemmelement lösbar arretiert. Erfindungsgemäß wird somit eine Schnappverbindung zwischen dem Gehäuse und dem elastischen Klemmelement bereitgestellt, die werkzeuglos auch in engen Bauräumen herstellbar ist. Grundsätzlich ist es aber denkbar, dass solch ein Gehäuse auch für mechanische Steckverbinder geeignet ist.

Weiterhin weisen die Verbindungsmittel Hinterschneidungen auf. Die Hinterschneidungen sind Vertiefungen oder Aussparungen, in welche die flexiblen Arme des Klemmelements rastend eingreifen, wobei das Material punktuell oder flächig in eckiger, runder, gewellter, geriffelter oder in einer anderen Form vertieft oder ausgespart sein kann. Vorteilhafterweise ist vorgesehen, dass die Verbindungsmittel außenliegende Hinterschneidungen umfassen, die an zwei gegenüberliegenden Außenflächen des Gehäuses ausgebildet sind. Zusätzlich oder alternativ können die Verbindungsmittel innenliegende Hinterschneidungen aufweisen. Dann könnten die oder zumindest einige der flexiblen Arme des Klemmelements in die Verbindungsmittel rastend eingreifen. Grundsätzlich wird durch die Hinterschneidungen eine stabile und dennoch einfach zu montierende Rastverbindung bereitgestellt, bei der das Gehäuse auf einfache Weise auf das Klemmelement aufgesteckt werden kann.

Des Weiteren sind die Verbindungsmittel entlang eines Klemmbereichs, in den das Klemmelement im gesteckten Zustand, in welchem das Gehäuse auf das Klemmelement gesteckt ist, eingreifen, im Querschnitt zumindest kreissegmentförmig ausgebildet. Mit anderen Worten weisen die Verbindungsmittel zumindest über einen Längsabschnitt eine zylindrische Mantelfläche auf. Auf diese Weise kann ein kostengünstig erhältlicher Rohrclip, der üblicherweise zur Fixierung von Aufputz-Lehrrohren für Elektroleitungen eingesetzt wird, als das Klemmelement verwendet werden. Die Verbindungsmittel können entlang des Klemmbereichs im Querschnitt auch vollständig kreisförmig sein. Beispielsweise können die Verbindungsmittel zylindrisch ausgebildet und in dem Gehäuse eingefasst sein. Eine besonders stabile und einfach zu montierende Schnappverbindung wird erzielt, wenn die Verbindungselemente entlang des Klemmbereichs im Querschnitt mehr als halbkreisförmig und weniger als volkreisförmig ausgebildet sind. Weiterhin ist denkbar, dass die Verbindungselemente zumindest entlang des Klemmbereichs eckig ausgebildet sind.

Zweckmäßigerweise können die Verbindungsmittel im Klemmbereich wenigstens eine Rippe, insbesondere mehrere Rippen aufweisen, um eine besonders steife und feste Verbindung mit dem Klemmelement herstellen zu können. Die wenigstens eine Rippe kann sich vorzugsweise quer zu einer Aufsteckrichtung des Gehäuses auf das Klemmelement erstrecken. Hierbei können die flexiblen Arme des Klemmelements in mit dem Klemmbereich in Anlage kommenden Außenflächen zu den Rippen korrespondierende Aussparungen aufweisen. Dadurch wird die Verbindung in axialer Richtung gefestigt und ein seitliches Verrutschen des Gehäuses im gesteckten Zustand verhindert.

Die Verbindungsmittel weisen weiterhin seitliche Anschlagsflächen auf, die zwischen sich einen Klemmbereich definieren, in den das Klemmelement im gesteckten Zustand, in welchem das Gehäuse auf das Klemmelement gesteckt ist, eingreifen. Dies gewährleistet einen sicheren Halt des Gehäuses am Klemmelement und verhindert ein axial seitliches Verrutschen des Gehäuses im gesteckten Zustand. Die Anschlagsflächen können zusätzlich oder alternativ zu den Rippen im Klemmbereich verwendet werden.

Gemäß einer Ausgestaltung können die Verbindungsmittel integrale Bestandteile des Gehäuses sein. Dadurch wird ein besonders stabiles und dichtes Gehäuse bereitgestellt.

Gemäß einer zur integralen Ausführungsform alternativen Ausgestaltung können die Verbindungsmittel lösbar an dem Gehäuse befestigt sein. Dadurch wird ein besonders flexibles Gehäuse bereitgestellt, das an das jeweils verfügbare Klemmelement anpassbar ist. Beispielsweise kann es sich bei dem Klemmelement um standardmäßig erhältliche Rohrclips handeln. Diese sind üblicherweise in unterschiedlichen Größen erhältlich, deren zwischen den flexiblen Armen definierten Aufnahmebereiche unterschiedlich große Spannbereiche aufweisen. Somit können am Beispiel des Rohrclips die Verbindungsmittel mit demjenigen Klemmbereich eingesetzt werden, dessen Außendurchmesser für den verfügbaren Rohrclip vorgesehen ist. Beispielsweise weist ein nach der International Electrotechnical Commission genormter Rohrclip IEC 20 einen Spannbereich von 20 mm auf, so dass der Außendurchmesser des Klemmbereichs der Verbindungsmittel zur sicheren Arretierung des Gehäuses am Rohrclip 20 mm betragen sollte. Darüber hinaus können durch die lösbar befestigte Ausgestaltung der Verbindungsmittel Gehäuse zur reversiblen rastenden Aufnahme mit den Verbindungsmitteln nachgerüstet werden.

Gemäß einem weiteren Aspekt der vorliegenden Erfindung ist vorgesehen, dass das Gehäuse eine T-förmige Grundform für einen elektrischen T-Verteiler aufweist. Damit eignet sich das Gehäuse für T-Verteiler, über die elektronische Bauteile in ein Bussystem eingebunden werden. Solche T-Verteiler, auch T-Connector genannt, weisen wenigstens eine Abzweigleitung auf, über welche beispielsweise Sensoren oder Aktoren an eine Stromleitung und/oder eine Datenbusleitung eines Bussystems angeschlossen werden können. Neben der T-förmigen Grundform kann beispielsweise auch vorgesehen sein, dass die Gehäuse lediglich eine Eingangs- und eine Ausgangsöffnung aufweisen, wonach das Gehäuse dann beispielsweise eine rechteckige Grundform aufweisen kann. Die vorgenannten Grundformen für das Gehäuse sind nicht einschränkend zu verstehen, da das Gehäuse ebenso rund oder mehreckig und/oder für eine Vielzahl an eingehenden und ausgehenden und insbesondere abzweigenden Leitungen ausgebildet sein kann.

Ein weiterer Gegenstand der vorliegenden Erfindung ist eine Anordnung zur Befestigung des erfindungsgemäßen Gehäuses. Die Anordnung umfasst erfindungsgemäß das vorbeschriebene Gehäuse und ein Klemmelement mit wenigstens zwei flexiblen Armen, zwischen denen ein Aufnahmeraum definiert ist, in den die Verbindungsmittel des Gehäuses reversibel rastend aufgenommen sind. Somit kann das Gehäuse auf einfache Weise auf das Klemmelement gesteckt werden. Dabei können die flexiblen Arme des Klemmelements die Verbindungselemente umgreifen und/oder in diese rastend eingreifen.

In bevorzugter Weise ist das Klemmelement ein Rohrclip. Dabei kann es sich um herkömmliche Standard-Rohrclips handeln, die üblicherweise zur Fixierung von Aufputz-Lehrrohren für Elektroleitungen verwendet werden. Dadurch wird eine kostengünstige und einfach herzustellende Anordnung zur Befestigung des Gehäuses am Klemmelement bereitgestellt.

Gemäß einem Aspekt der erfindungsgemäßen Anordnung ist weiterhin ein als Tragschiene ausgebildetes Trägerelement vorgesehen, wobei das Klemmelement an der Tragschiene gehalten ist. Das Klemmelement ist vorzugsweise lösbar an der Tragschiene gehalten. Eine solche Tragschiene kann beispielsweise eine Hutschiene beziehungsweise DIN-Schiene oder eine Profilschiene mit Nuten sein, auf welche der Rohrclip aufsetzbar oder einschiebbar ist. Auf diese Weise wird eine besonders einfach herzustellende Anordnung bereitgestellt, die auch in beengten Bauraumverhältnissen auf einfache Weise durch Aufdrücken des Gehäuses auf das Klemmelement hergestellt werden kann. Grundsätzlich kann das Trägerelement aber auch eine Maschinenwand oder irgendeine andere Wand sein, an welche das Klemmelement, insbesondere der Rohrclip, vor Herstellung der Rastverbindung mit dem Gehäuse festgeschraubt wurde.

Bevorzugte Ausführungsbeispiele der Erfindung werden in den Zeichnungen dargestellt und nachstehend beschrieben. Hierin zeigt:
- Figur 1: eine Anordnung gemäß einer Ausführungsform in perspektivischer Darstellung;
- Figur 2: die Anordnung aus Figur 1 in einer weiteren perspektivischer Darstellung;
- Figur 3: die Anordnung aus Figur 1 in einer noch weiteren perspektivischer Darstellung;
- Figur 4: die Anordnung aus Figur 1 mit einem alternativen Trägerelement in einer perspektivischen Darstellung;
- Figur 5: die Anordnung aus Figur 4 in einer weiteren perspektivischen Darstellung;
- Figur 6: die Anordnung aus Figur 4 in einer noch weiteren perspektivischen Darstellung;
- Figur 7: ein Gehäuse aus Figur 1 in einer ersten perspektivischen Ansicht;
- Figur 8: das Gehäuse in einer zweiten perspektivischen Ansicht;
- Figur 9: das Gehäuse in Draufsicht;
- Figur 10: das Gehäuse in Schnittansicht entlang der Linie X-X; und
- Figur 11: ein zu dem in Figur 7 gezeigten alternatives Gehäuse aus Figur 1 in perspektivischer Darstellung.

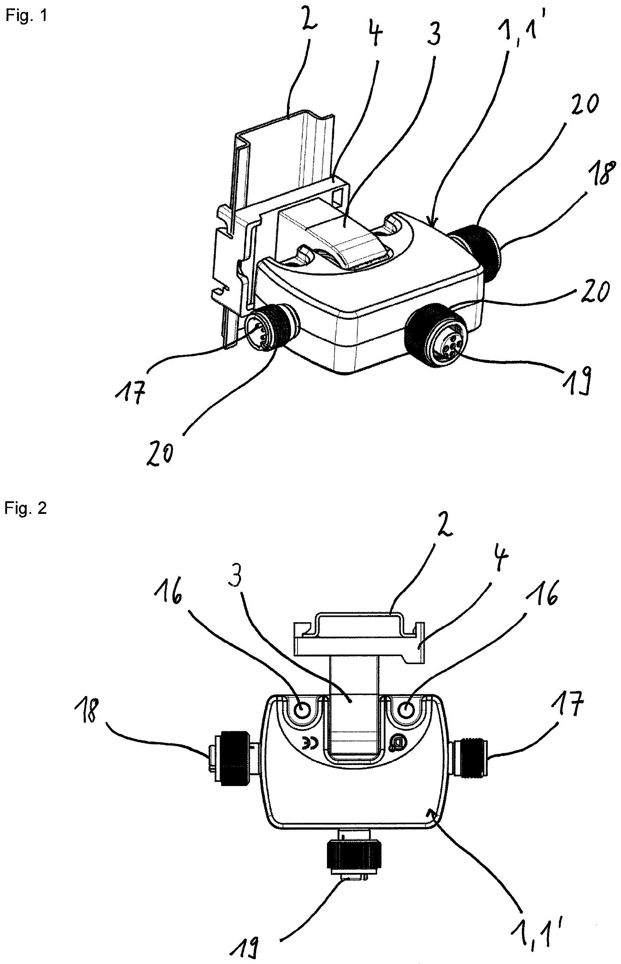

In den Figuren 1 bis 3 ist eine Anordnung zur Befestigung eines Steckergehäuses 1, 1' gemäß einer Ausführungsform der vorliegenden Erfindung aus unterschiedlichen Ansichten dargestellt. Kurz zusammengefasst dient die Anordnung zur werkzeuglosen Befestigung des Steckergehäuses 1, 1' an einem Trägerelement 2, das beispielsweise an einer Wand angeschraubt sein kann. Das Trägerelement 2 ist hier als Hutschiene beziehungsweise standardisierte DIN-Schiene ausgebildet. Das Steckergehäuse 1, 1' ist im gesteckten Zustand gezeigt, in welchem das Steckergehäuse 1, 1' auf ein als Rohrclip 3 ausgebildetes Klemmelement aufgesteckt ist. Der Rohrclip 3 ist über eine Halteplatte 4 an der Hutschiene 2 befestigt.

Der Rohrclip 3 ist ein herkömmlicher Rohrclip, wie er üblicherweise zur Fixierung einer Aufputz-Elektroleitung verwendet wird. Dieser weist in an sich bekannter Weise zwei flexible gebogene Arme 5 auf, zwischen denen ein zylindrischer Aufnahmebereich 6 mit einem Durchmesser von hier 20 mm definiert ist. Zentral zwischen den beiden Armen 5 weist der Rohrclip 3 in üblicher Weise eine nicht gezeigte Bohrung auf, durch welche eine ebenfalls nicht gezeigte Schraube zum Befestigen des Rohrclips 3 an der Halteplatte 4 greift. Die Halteplatte 4 kann auf die Trägerschiene 2 aufgeschoben oder aufgesteckt sein.

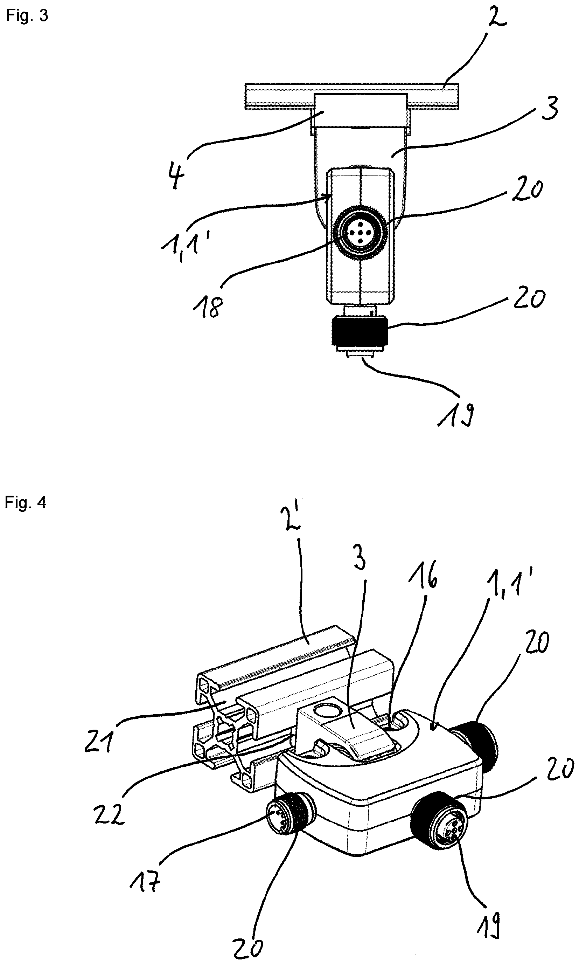

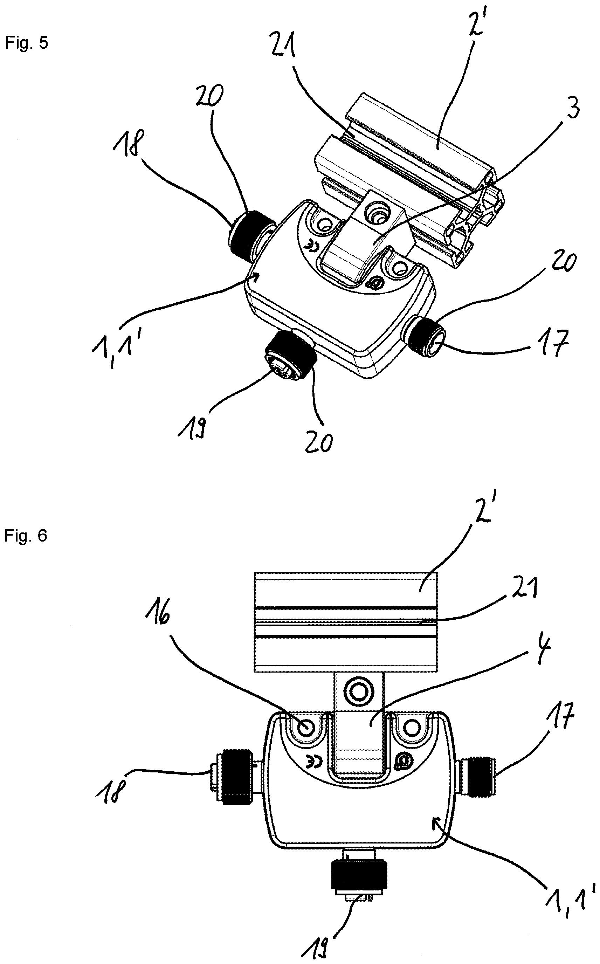

In den Figuren 4 bis 6 ist die Anordnung aus den Figuren 1 bis 3 mit einem alternativen Trägerelement 2' gezeigt, das hier nicht als eine Hutschiene, sondern als eine Trägerschiene 2' mit vier sich in Längsrichtung der Trägerschiene erstreckenden Nuten 21 ausgebildet ist. Im Unterschied zu der als Hutschiene ausgebildeten Trägerschiene 2 weist die in den Figuren 4 bis 6 gezeigte Anordnung keine Halteplatte 4 auf, da der herkömmliche Rohrclip 3 an seinem vom Aufnahmebereich 6 wegweisenden Endbereich in an sich bekannter Weise einen Sockel 22 aufweist, über welche der Rohrclip 3 in eine der Nuten 21 der Trägerschiene 2' einschiebbar ist.

Die weiteren Ausführungen gelten sowohl für die in den Figuren 1 bis 3 als auch in den Figuren 4 bis 6 gezeigten Ausführungsformen.

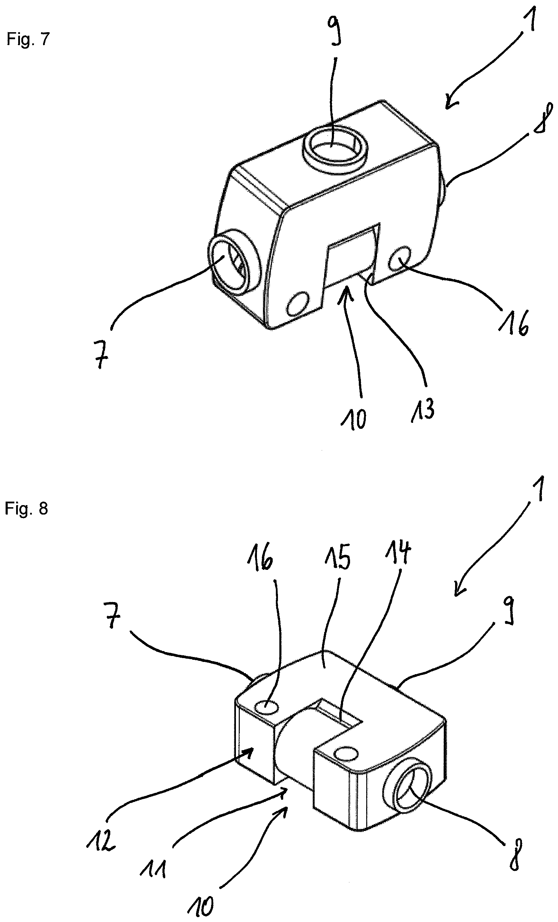

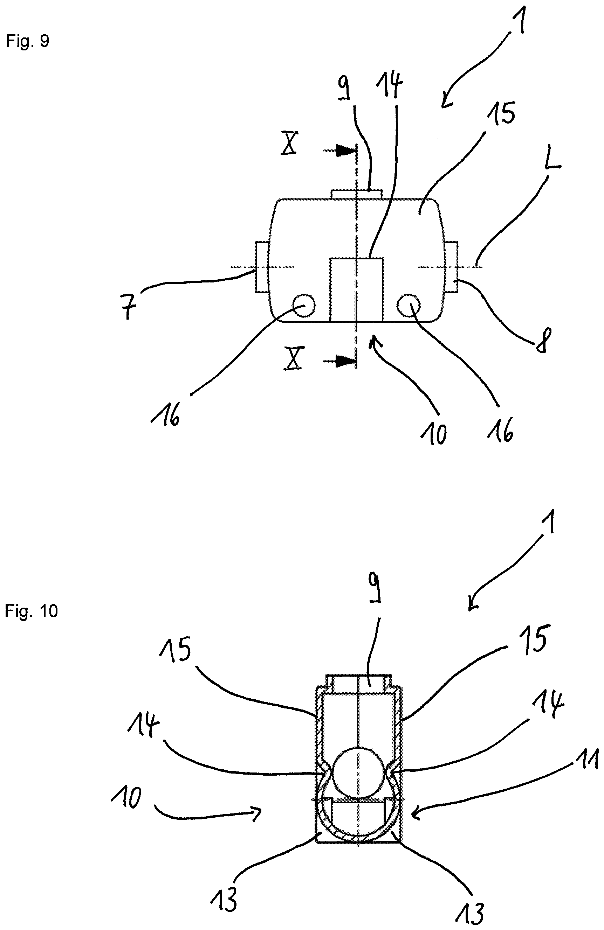

In den Figuren 7 bis 10 ist das erfindungsgemäße Steckergehäuse 1 gezeigt. Dieses ist hier beispielhaft als ein T-förmiges Steckergehäuse für einen elektrischen T-Verteiler als eine Komponente in einem nicht gezeigten Bussystem ausgebildet. Grundsätzlich kann das Steckergehäuse auch andere Grundformen aufweisen. Das Steckergehäuse 1 weist hier eine Eingangsöffnung 7, eine Ausgangsöffnung 8 sowie eine Abzweigöffnung 9 auf, wobei in den Öffnungen 7, 8, 9 Steckelemente 17, 18, 19 des T-Verteilers mit Außengewinden 20 zur Aufnahme eines nicht gezeigten Steckers beziehungsweise einer Kupplung angeordnet sind. Beispielsweise kann der T-Verteiler über den Einbaustecker 17 der Eingangsöffnung 7 und die Buchse 18 der Ausgangsöffnung 8 mit einer Leitung zur Stromversorgung und/oder einer seriellen oder parallelen Datenleitung des Bussystems verbunden werden, indem der nicht gezeigte Stecker beziehungsweise die Kupplung auf die Steckelemente 17, 18 aufgeschraubt werden. Um einen hier nicht gezeigten Sensor oder Aktor mit dem T-Verteiler zu verbinden, kann eine mit einem nicht gezeigten Stecker versehene Abzweigleitung auf das hier als Buchse ausgebildete Steckelement 19 der Abzweigöffnung 9 aufgeschraubt werden. Über die Abzweigleitung kann der Sensor oder Aktor in die Stromleitung und/oder Datenleitung integriert werden. Auf diese Weise kann der angebundene Sensor beziehungsweise Aktor mit elektrischem Strom versorgt werden und/oder Befehle erhalten und/oder Daten können aus dem Sensor beziehungsweise Aktor ausgelesen werden.

Zur reversiblen Verrastung mit dem Rohrclip 3 weist das Steckergehäuse 1 Verbindungsmittel 10 auf, die hier integraler Bestandteil des Steckergehäuses 1 sind. Diese sind mittig zwischen der Eingangs- und der Ausgangsöffnung 7, 8 in einem der Abzweigöffnung 9 gegenüberliegenden Bereich des Steckergehäuses 1 ausgebildet. Konkret weisen die Verbindungsmittel 10 einen kreissegmentförmigen Klemmbereich 11 auf, der sich ausgehend von einer der Abzweigöffnung 9 gegenüberliegenden Seitenfläche 12 des Steckergehäuses 1 bis hin zur Mitte des Steckergehäuses 1 beidseitig erstreckt. Der Klemmbereich 11 entspricht in axialer Längserstreckung der Breite der Arme 5 des Rohrclips 3. Zur axialen Fixierung des Steckergehäuses 1 gegenüber dem Rohrclip 3 im gesteckten Zustand weisen die Verbindungsmittel 10 zwei sich gegenüberliegende seitliche Anschlagsflächen 13 auf, die zwischen sich den Klemmbereich 11 in Längsrichtung begrenzen. Der Klemmbereich 11 bildet in Längsrichtung betrachtet im Querschnitt einen Dreiviertelkreis mit einem Durchmesser von 20 mm aus. Mittig des Steckergehäuses 1 weisen die Verbindungsmittel 10 zwei außenliegende Hinterschneidungen 14 auf, die an zwei gegenüberliegenden Außenflächen 15 des Steckergehäuses 1 ausgebildet sind und sich parallel zu einer durch die Eingangsöffnung 7 und die Ausgangsöffnung 8 verlaufende Längsachse L erstrecken.

Zur werkzeuglosen Befestigung des Steckergehäuses 1 an dem Rohrclip 3 wird dieses auf den Rohrclip 3 reversibel rastend aufgesteckt. Im gesteckten Zustand umgreifen die Arme 5 des Rohrclips 3 den Klemmbereich 11 des Steckergehäuses 1 und schnappen in die Hinterschneidungen 14.

Das Steckergehäuse 1 weist zudem zwei äußere Durchgangsbohrungen 16 auf, mittels denen das Steckergehäuse 1 zusätzlich oder alternativ zu der Rastverbindung beispielsweise mit einer Maschinenwand verschraubt werden kann.

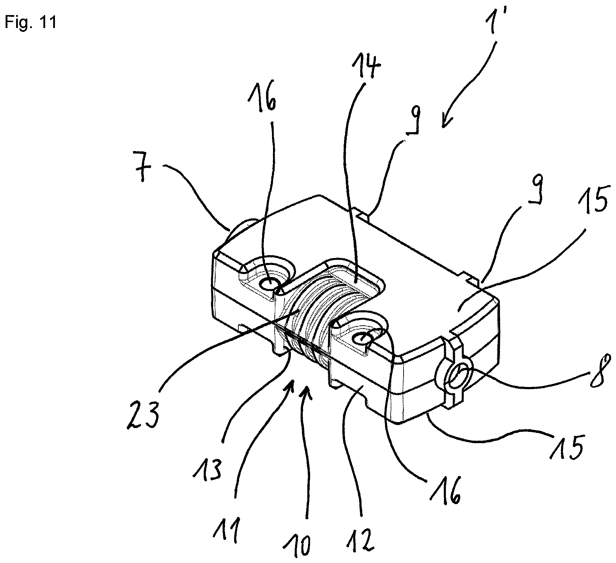

In Figur 11 ist ein alternatives Gehäuse 1' gezeigt, wobei Bauteile, die mit dem vorbeschriebenen Gehäuse 1 übereinstimmen, mit gleichen Bezugsziffern versehen sind.

Das alternative Gehäuse 1' unterscheidet sich vom Gehäuse 1 lediglich zum einen dadurch, dass das alternative Gehäuse 1' als Doppel-T-Steckergehäuse mit zwei Abzweigöffnungen 9 ausgebildet ist. Somit können hier zwei hier nicht gezeigte Komponenten, insbesondere Sensoren oder Aktoren, über den Doppel-T-Verteiler in die Stromleitung und/oder Datenleitung integriert werden. Zum anderen unterscheidet sich das alternative Gehäuse 1' vom Gehäuse 1 dadurch, dass der Klemmbereich 11 keine glatte Mantelfläche, sondern eine geriffelte Oberfläche mit mehreren Rippen 23 aufweist. Die Rippen 23 erstrecken sich quer zur Längsachse L respektive in Umfangsrichtung des kreissegmentförmigen Klemmbereichs 11. Das alternative Gehäuse 1' kann in zum Gehäuse 1 analoger Weise auf den Rohrclip 3 aufgesteckt werden, wodurch die in den Figuren 1 bis 6 gezeigte Anordnung gebildet wird. Die flexiblen Arme 5 des Klemmelements 3 weisen dann zusätzlich in mit dem Klemmbereich 11 in Anlage kommenden Außenflächen zu den Rippen 23 korrespondierende Aussparungen auf, so dass die Arme 5 und der Klemmbereich 11 wie eine Verzahnung ineinandergreifen. Dadurch wird die Klemmverbindung zwischen dem alternativen Gehäuse 1' und dem Rohrclip 3 in axialer Richtung im Vergleich zum Gehäuse 1 weiter gefestigt.

### Bezugszeichenliste

- 1, 1': Steckergehäuse
- 2, 2': Trägerelement
- 3: Rohrclip
- 4: Halteplatte
- 5: Arm
- 6: Aufnahmebereich
- 7: Eingangsöffnung
- 8: Ausgangsöffnung
- 9: Abzweigöffnung
- 10: Verbindungsmittel
- 11: Klemmbereich
- 12: Seitenfläche
- 13: Anschlagsfläche
- 14: Hinterschneidung
- 15: Außenfläche
- 16: Durchgangsbohrung
- 17: Einbaustecker
- 18: Buchse
- 19: Buchse
- 20: Außengewinde
- 21: Nut
- 22: Sockel
- 23: Rippe
- L: Längsachse

## Patentansprüche

1. Steckergehäuse (1, 1') mit mindestens einem Steckelement (17, 18, 19), wobei solches Steckergehäuse (1, 1') Verbindungsmittel (10) zur reversiblen rastenden
Aufnahme von flexiblen Armen eines Klemmelements (3) aufweist,
wobei die Verbindungsmittel (10) entlang eines Klemmbereichs (11), in den das Klemmelement (3) im gesteckten Zustand, in dem das Steckergehäuse (1, 1') auf das Klemmelement (3) gesteckt ist, eingreift, im Querschnitt zumindest kreissegmentförmig ausgebildet ist,
**dadurch gekennzeichnet, dass** die Verbindungsmittel (10) außenliegende Hinterschneidungen (14) umfassen, die an zwei gegenüberliegenden Außenflächen (15) des Steckergehäuses (1, 1') ausgebildet sind, und
dass die Verbindungsmittel (10) seitliche Anschlagsflächen (13) aufweisen, die zwischen sich den Klemmbereich (11) definieren.

2. Steckergehäuse (1, 1') nach Anspruch 1, **dadurch gekennzeichnet,**
**dass** die Verbindungsmittel (10), entlang des Klemmbereichs (11), wenigstens eine Rippe (23) aufweisen.

3. Steckergehäuse (1, 1') nach Anspruch 1 oder 2, **dadurch gekennzeichnet,**
**dass** die Verbindungsmittel (10) integrale Bestandteile des Steckergehäuses (1, 1') sind.

4. Steckergehäuse (1, 1') nach Anspruch 1 oder 2, **dadurch gekennzeichnet,**
**dass** die Verbindungsmittel (10) lösbar an dem Steckergehäuse (1, 1') befestigt sind.

5. Steckergehäuse (1, 1') nach einem der vorherigen Ansprüche, **dadurch gekennzeichnet,**
**dass** das Steckergehäuse (1, 1') eine T-förmige Grundform für einen elektrischen T-Verteiler aufweist.

6. Anordnung, umfassend
ein Steckergehäuse (1, 1') nach einem der vorherigen Ansprüche und
ein Klemmelement (3) mit wenigstens zwei flexiblen Armen, zwischen denen ein Aufnahmeraum (6) definiert ist, in den die Verbindungsmittel (10) des Steckergehäuses (1, 1') reversibel rastend aufgenommen sind.

7. Anordnung nach Anspruch 6, **dadurch gekennzeichnet,**
**dass** das Klemmelement (3) ein Rohrclip ist.

8. Anordnung nach Anspruch 6 oder 7, **dadurch gekennzeichnet,**
**dass** weiterhin ein als Tragschiene ausgebildetes Trägerelement (2, 2') vorgesehen ist, und
**dass** das Klemmelement (3) an der Tragschiene (2, 2') gehalten ist.

## Claims

1. Plug housing (1, 1') having at least one plug element (17, 18, 19), wherein such a plug housing (1, 1') has connecting means (10) for the reversible latching reception of flexible arms of a clamping element (3),
wherein the connecting means (10) along a clamping region (11), into which the clamping element (3) in plugged condition, in which the plug housing (1, 1') is plugged onto the clamping element (3), engages, is formed in cross section at least circular segment shaped,
**characterised in that** the connecting means (10) comprise undercuts (14) lying on the outside which are formed at two opposite outer surfaces (15) of the plug housing (1, 1'), and
that the connecting means (10) have lateral abutment surfaces (13) which define the clamping region (11) between them.

2. Plug housing (1, 1') according to claim 1, **characterised in**
**that** the connecting means (10), along the clamping region (11), have at least one rib (23).

3. Plug housing (1, 1') according to claim 1 or 2, **characterised in**
**that** the connecting means (10) are integral components of the plug housing (1, 1').

4. Plug housing (1, 1') according to claim 1 or 2, **characterised in**
**that** the connecting means (10) are fastened releasably at the plug housing (1, 1').

5. Plug housing (1, 1') according to any of the preceding claims, **characterised in**
**that** the plug housing (1, 1') has a T-shaped basic form for an electrical T-distributor.

6. Assembly, comprising
a plug housing (1, 1') according to any of the preceding claims and
a clamping element (3) with at least two flexible arms between which a receiving space (6) is defined, into which the connecting means (10) of the plug housing (1, 1') are reversibly latchingly received.

7. Assembly according to claim 6, **characterised in**
**that** the clamping element (3) is a pipe clip.

8. Assembly according to claim 6 or 7, **characterised in**
**that** furthermore a carrier element (2, 2') formed as carrier rail is provided and
**that** the clamping element (3) is held at the carrier rail (2, 2').

## Revendications

1. Boîtier de fiches (1, 1') avec au moins un élément enfichable (17, 18, 19), dans lequel un boîtier de fiches (1, 1') de ce type présente des moyens de raccordement (10) pour loger par enclenchement de manière réversible des bras flexibles d'un élément de serrage (3),
dans lequel les moyens de raccordement (10) sont réalisés de manière à présenter au moins une forme de segment circulaire dans la section transversale le long d'une zone de serrage (11), avec laquelle l'élément de serrage (3) vient en prise dans l'état enfiché, dans lequel le boîtier de fiches (1, 1') est enfiché sur l'élément de serrage (3),
**caractérisé en ce que** les moyens de raccordement (10) comprennent des contre-dépouilles (14) situées à l'extérieur, qui sont réalisées au niveau de deux surfaces extérieures (15) se faisant face du boîtier de fiches (1, 1'), et
que les moyens de raccordement (10) présentent des surfaces de butée (13) latérales, qui définissent entre elles la zone de serrage (11).

2. Boîtier de fiches (1, 1') selon la revendication 1, **caractérisé en ce**
**que** les moyens de raccordement (10) présentent le long de la zone de serrage (11) au moins une nervure (23).

3. Boîtier de fiches (1, 1') selon la revendication 1 ou 2, **caractérisé en ce**
**que** les moyens de raccordement (10) font partie intégrante du boîtier de fiches (1, 1').

4. Boîtier de fiches (1, 1') selon la revendication 1 ou 2, **caractérisé en ce**
**que** les moyens de raccordement (10) sont fixés de manière amovible au boîtier de fiches (1, 1').

5. Boîtier de fiches (1, 1') selon l'une quelconque des revendications précédentes, **caractérisé en ce**
**que** le boîtier de fiches (1, 1') présente une forme de base en forme de T pour un tableau de distribution électrique en T.

6. Ensemble comprenant
un boîtier de fiches (1, 1') selon l'une quelconque des revendications précédentes, et
un élément de serrage (3) avec au moins deux bras flexibles, entre lesquels un espace de réception (6) est défini, dans lequel les moyens de raccordement (10) du boîtier de fiches (1, 1') sont logés par enclenchement de manière réversible.

7. Ensemble selon la revendication 6, **caractérisé en ce**
**que** l'élément de serrage (3) est un clip pour tuyaux.

8. Ensemble selon la revendication 6 ou 7, **caractérisé en ce**
**que** par ailleurs un élément de support (2, 2') réalisé en tant que rail porteur est prévu, et
**que** l'élément de serrage (3) est maintenu au niveau du rail porteur (2, 2').
